# EUROPEAN PATENT SPECIFICATION

(11) **EP 1 320 935 B1**
(45) Date of publication and mention of the grant of the patent: **19.11.2008**
(21) Application number: 01962999.7
(22) Date of filing: 04.09.2001
(51) Int. Cl.: H04B 1/38, G06F 13/38, H04L 12/28

(54) **IMPROVEMENTS IN OR RELATING TO ELECTRONIC SYSTEMS**
VERBESSERUNGEN IN ELEKTRONISCHEN SYSTEMEN
AMELIORATIONS APPORTEES A DES SYSTEMES ELECTRONIQUES

(30) Priority: 29.09.2000 GB 0023860
(43) Date of publication of application: 25.06.2003
(73) Proprietor: ROKE MANOR RESEARCH LIMITED, Romsey, Hants SO51 0ZN (GB)
(72) Inventor: SPICER, John, Joseph, Lockerley, Hampshire SO51 0JQ (GB)
(74) Representative: Payne, Janice Julia
(86) International application number: PCT/EP2001/010247
(87) International publication number: WO 2002/027947

(56) References cited:
- EP-A- 0 752 764
- WO-A-99/55028
- PRATHIMA AGRAWAL ET AL: "SWAN: A MOBILE MULTIMEDIA WIRELESS NETWORK" IEEE PERSONAL COMMUNICATIONS, IEEE COMMUNICATIONS SOCIETY, US, vol. 3, no. 2, 1 April 1996 (1996-04-01), pages 18-33, XP000583666 ISSN: 1070-9916

## Description

The present invention relates to improvements in or relating to electronic systems.

Electronic systems are becoming increasingly complex whether at board level or chip scale. At the same time, such systems are required to handle greater volumes of data at higher rates. In order to implement these systems successfully, the processing is commonly broken down into manageable and testable sub-functions. These sub-functions must intercommunicate to pass the data and control signals to complete the system. However, the difficulty of providing the necessary interconnections to allow the intercommunication and providing sufficient flexibility causes bottlenecks in the electronic systems.

European Patent Application EP 0752764 discloses a wireless communication network comprising transceivers. PCT Application WO 99/55028 describes a method of synchronization in a communication network.

Aspects of the present invention are described by the appended claims.

For a better understanding of the present invention, reference will now be made, by way of example only, to the accompanying drawings in which:-
Figure 1 illustrates a processing array in accordance with the present invention; and
Figure 2 illustrates a sub-function node used in the processing array of Figure 1.

The present invention provides a high bandwidth, flexible method for providing intercommunication between sub-function nodes in a complex electronic system. The invention uses the transmission and reception of radio borne multiple access signals between the sub-function nodes for the transmission of data between the sub-function nodes, each sub-function node being equipped with a transceiver. A secondary, lower speed conventional backplane is used to distribute timing and synchronisation signals along with multiple access parameters.

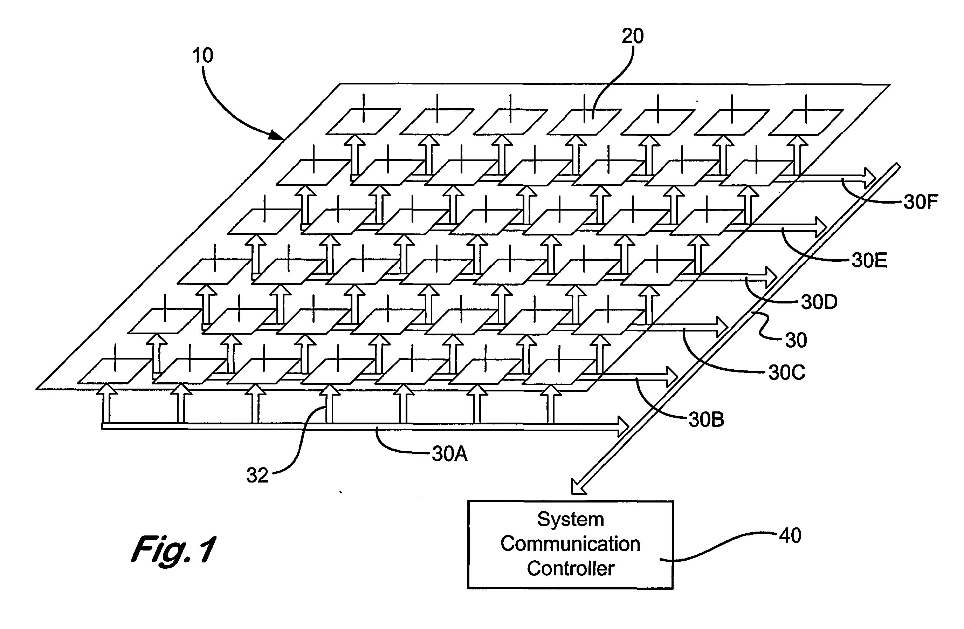

Figure 1 shows an array 10 in accordance with the present invention. The array 10 comprises forty-two sub-function nodes 20 (only one labelled for clarity) arranged in a six by seven array. It will be appreciated that, although a particular array is shown in Figure 1, any number of sub-function nodes 20 can be utilised in any suitable configuration. As shown in Figure 1, seven sub-function nodes 20 are connected to an arm 30A, 30B, 30C, 30D, 30E, 30F of a secondary bus 30 via respective links 32. A system communication controller 40 is connected to the secondary bus 30 for controlling the secondary bus 30 and its connecting arms 30A, 30B, 30C, 30D, 30E, 30F and hence each sub-function node 20. The secondary bus 30 and its connecting arms 30A, 30B, 30C, 30D, 30E, 30F comprise a conventional backplane. The system communication controller 40 is responsible for distributing time and synchronisation signals for the sub-function nodes 20 along the secondary bus 30, 30A, 30B, 30C, 30D, 30E, 30F.

In accordance with the present invention, the system communication controller 40 also sets the connectivity for radio access between the sub-function nodes 20 by the distribution of multiple access 'tokens'. Various multiple access techniques can be used, for example, frequency division multiple access (FDMA), code division multiple access (CDMA) or time division multiple access (TDMA) techniques. Each link between sub-function nodes 20 is characterised by a 'token'. For example, in a TDMA scheme, the 'token' would allocated a particular time slot number to an inter-node link. For other multiple access schemes, a 'token' might represent a spreading code or carrier frequency etc.

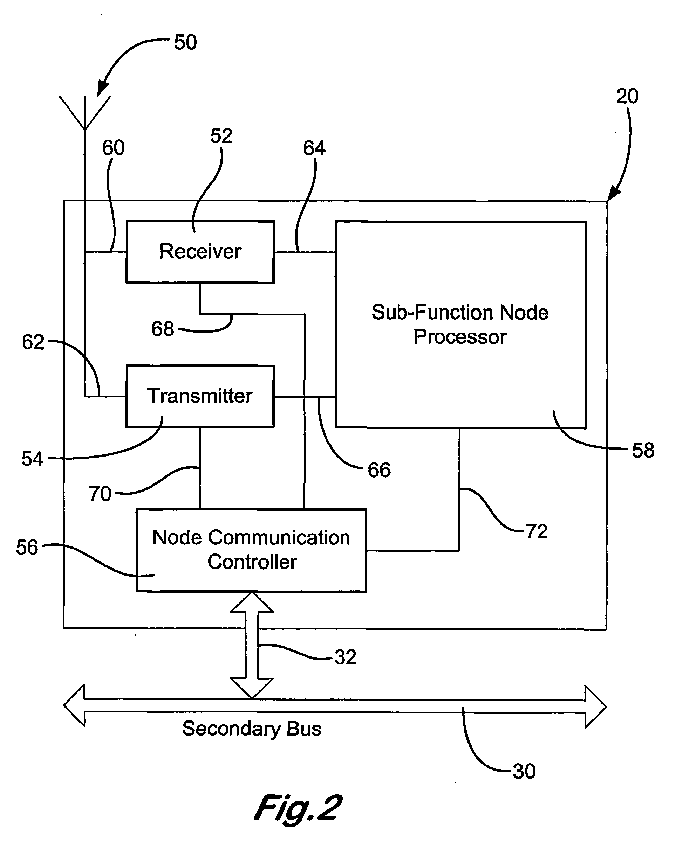

A sub-function node 20 is shown in more detail in Figure 2. Each sub-function node 20 is equipped with an antenna 50, a receiver 52, a transmitter 54 and a node communications controller 56. Each sub-function node 20 also includes a sub-function node processor 58 which executes the sub-function associated with that particular sub-function node 20. As shown in Figure 2, the antenna 50 is connected to both the receiver 52 and the transmitter 54 by connections 60 and 62 respectively. The receiver 52 and transmitter 54 are connected to the sub-function node processor 58 via connections 64 and 66 respectively. Received signals are transferred from the receiver 52 to the processor 58 for processing via connection 64. Signals to be transmitted from the sub-function node 20 are generated in the processor 58 and are transferred to the transmitter 54 via connection 66.

The receiver 52 and transmitter 54 are connected to the node communication controller 58 via control lines 68 and 70 respectively. The node communication controller 58 is also connected to the sub-function node processor 58 via connection 72.

As described above, the node communication controller 56 is connected to the secondary bus 30 via link 32. Control signals are transmitted to the receiver 52 and transmitter 54 via the control lines 68, 70 and to the sub-function node processor 58 via connection 72 in accordance with the signals received from the secondary bus 30 via the link 32 so that the antenna 50 is switched between a receiving mode and a transmitting mode.

The carrier frequencies of the radio signal used in this invention are not fundamental to its operation. However, in order to support the high bandwidths (one of the advantages of the present invention), they would need to be quite high, for example, in excess of tens of GHz.

The system communication controller 40 shown in Figure 1 is responsible for setting up and tearing down links between sub-processing nodes 20. These links may be uni- or bi-directional, point-to-point, point-to-multi-point or a combination thereof.

The links may be set up according to a predetermined schedule or may be set up dynamically as they are required by the processing architecture. If a predetermined schedule is used, the schedule is stored in the system communication controller 40 and the 'tokens' are distributed to the sub-function nodes 20. The schedule could be fixed and loaded once shortly after powering up the electronic system of which the array 10 forms a part. Alternatively, the schedule may be variable with time and the links are modified in accordance with a predetermined timetable.

If the allocation of links is dynamic, the connectivity of the system is event data driven. A sub-function node 20 determines in its sub-function node processor 58, according to its current data processing state, if a link to another node 20 is necessary. If such a link is necessary, a request is made by the processor 58 via connection 72 to the node communication controller 56 which, in turn, passes the request to the system communication controller 40 via link 32 and over the secondary bus 30. The system communication controller 40 then sets up the link by distributing a transmission 'token' to the node requiring to transmit and a reception 'token' to the appropriate sub-function node which needs to receive. Once the reception 'token' is received at the sub-function node 20 which is to receive over the secondary bus 30 and link 32, the node communications controller 56 configures the receiver 52 according to the received 'token'. Similarly, for the sub-function node which is to transmit, once the transmit 'token' is received over the secondary bus and link 32, the communications controller 56 configures the transmitter 54 according to the transmit 'token'.

The present invention has application in integrated circuits, racks of printed circuit boards or modules. As there is no specific size requirements, the invention can also be applied to larger scale systems.

## Claims

1. An array (10) comprising a plurality of sub-function nodes (20), at least two being connected by a radio link for transmitting data signals, including a secondary bus (30) and a system communication controller (40) for distributing timing and synchronisation signals over the secondary bus to the sub-function nodes.

2. An array according to claim 1, wherein the system communication controller (40) also supplies enabling signals for establishing radio links between sub-function nodes.

3. An electronics system including at least one array (10) according to any one of claims 1 or 2.

4. A method of operating an electronics system according to claim 3, comprising the steps of:
a) supplying timing and synchronisation signals via the secondary bus (30) from the system communication controller to the sub-function nodes; and
b) transmitting data signals via the radio links between at least two sub-function nodes.

5. A method according to claim 4, wherein step b) comprises using a multiple access technique.

6. A method according to claim 5, wherein the multiple access technique comprises a combination of two or more of frequency division, code division and time division multiple access.

## Patentansprüche

1. Anordnung (10), die mehrere Teilfunktionsknoten (20) umfasst, von denen mindestens zwei zum Übertragen von Datensignalen über eine Funkverbindung verbunden sind, mit einem sekundären Bus (30) und einer Systemkommunikationssteuerung (40) zum Verteilen von Zeitgabe- und Synchronisationssignalen über den sekundären Bus an die Teilfunktionsknoten.

2. Anordnung nach Anspruch 1, bei der die Systemkommunikationssteuerung (40) auch Freigabesignale für den Aufbau von Funkverbindungen zwischen den Teilfunktionsknoten liefert.

3. Elektroniksystem, das mindestens eine Anordnung (10) nach einem der Ansprüche 1 und 2 aufweist.

4. Verfahren zum Betreiben eines Elektroniksystems nach Anspruch 3, das folgende Schritte umfasst:
a) Liefern von Zeitgabe- und Synchronisationssignalen über den sekundären Bus (30) von der Systemkommunikationssteuerung zu den Teilfunktionsknoten und
b) Übertragen von Datensignalen über die Funkverbindungen zwischen mindestens zwei Teilfunktionsknoten.

5. Verfahren nach Anspruch 4, bei dem Schritt b) die Anwendung einer Vielfachzugriffstechnik umfasst.

6. Verfahren nach Anspruch 5, bei dem die Vielfachzugriffstechnik eine Kombination aus mindestens zwei der Verfahren Frequenz-, Code- und Zeitvielfachzugriff umfasst.

## Revendications

1. Réseau (10) comprenant une pluralité de noeuds sous-fonctionnels (20), au moins deux étant reliés par liaison radioélectrique pour transmettre des signaux de données, comprenant un bus secondaire (30) et un contrôleur de communication système (40) pour acheminer des signaux de temporisation et de synchronisation sur le bus secondaire vers les noeuds sous-fonctionnels.

2. Réseau selon la revendication 1, dans lequel le contrôleur de communication système (40) fournit aussi des signaux de validation pour établir des liaisons radioélectriques entre des noeuds sous-fonctionnels.

3. Système électronique comprenant au moins un réseau (10) selon l'une quelconque des revendications 1 ou 2.

4. Procédé d'utilisation d'un système électronique selon la revendication 3, comprenant les étapes consistant :
a) à fournir des signaux de temporisation et de synchronisation par l'intermédiaire du bus secondaire (30) du contrôleur de communication système aux noeuds sous-fonctionnels, et
b) à transmettre des signaux de données par l'intermédiaire des liaisons radioélectriques entre au moins deux noeuds sous-fonctionnels.

5. Procédé selon la revendication 4, dans lequel l'étape b) consiste à utiliser une technique d'accès multiple.

6. Procédé selon la revendication 5, dans lequel la technique d'accès multiple consiste en une combinaison de deux ou davantage des accès multiples par répartition en fréquence, par différence de code et à répartition dans le temps.
